# EUROPEAN PATENT SPECIFICATION

(11) **EP 3 154 149 B1**
(45) Date of publication and mention of the grant of the patent: **06.12.2023**
(21) Application number: 15465549.2
(22) Date of filing: 09.10.2015
(51) Int. Cl.: H02J 7/00, H02J 7/04

(54) **SYSTEM AND METHOD FOR DEEP DISCHARGE PROTECTION OF A BATTERY**
SYSTEM UND VERFAHREN ZUM TIEFENTLADUNGSSCHUTZ EINER BATTERIE
SYSTÈME ET PROCÉDÉ DE PROTECTION CONTRE LES DÉCHARGES PROFONDES D'UNE BATTERIE

(43) Date of publication of application: 12.04.2017
(73) Proprietor: Continental Automotive Technologies GmbH, 30165 Hannover (DE)
(72) Inventor: Laiu, Cristian, 300351 Timisoara (RO); Zbagan, Marius-Lucian, 300458 Timisoara (RO)
(74) Representative: Continental Corporation

(56) References cited:
- CN-U- 204 331 839
- US-A1- 2005 127 878
- US-A1- 2011 006 736
- US-A1- 2013 229 145
- US-A1- 2015 022 956
- US-B1- 6 492 791

## Description

The current invention refers to a system and a method for deep discharge protection of a battery, particularly of a lithium-ion battery, in an on-board unit.

Rechargeable lithium-ion (li-ion) batteries are used for many different applications, e.g. in consumer and automotive electronics. For example, a li-ion battery may be used for powering a so-called on-board unit. In many countries all over the world there are toll roads (also known as turnpikes or tollways), for which a fee (or toll) is assessed for passage. Different systems for collecting the toll are known, for example electronic road toll systems. In electronic road toll systems an on-board unit is installed in the vehicle to determine the position of the vehicle and transmit position data to a central office for billing.

In li-ion batteries, lithium ions move from a negative electrode to a positive electrode during discharge and from the positive electrode to the negative electrode when charging. It should be avoided to completely discharge a li-ion battery (deep discharge), as this could lead to permanent damage of the battery. Therefore, deep discharge protection circuits are known. Such deep discharge protection circuits generally include a switch, mostly a transistor, which disconnects the battery from the system, when the battery voltage decreases below a certain level. The transistors, which are used as switches, are usually power MOS-transistors (MOS = metal oxide semiconductor). The transistors are generally arranged between a battery charging unit and the battery itself. During normal operation of the charging unit, a voltage is provided at an output of the charging circuit for charging the battery. This leads to a voltage drop across the transistor, which in turn leads to a heating of the transistor and, therefore, of the whole charging unit. Further, the system does not easily start up again once the transistor disconnects the battery from the charging unit (transistor is non-conducting), even if the system is connected to a vehicle battery.

The document CN 204 331 839 U discloses an on-board unit for electronic toll collection. The documents US 2013/229145 A1, US 2015/022956 A1, US 6 492 791 81 and US 2011/006736 A1 disclose devices with a battery and a deep discharge protection unit aiming among others at protecting the battery against over-discharge during transport. Document US 2005/127878 A1 discloses an over-discharge protection circuit for a rechargeable battery.

The problem to be solved by the current invention is, therefore, to provide a system and a method for deep discharge protection of a battery in an on-board unit which overcomes the above disadvantages.

This problem is solved by a system according to claim 1 and a method according to claim 7. Configurations and further developments of the invention are subject of the dependent claims.

A system for deep discharge protection of a chargeable battery in an on-board unit comprises a chargeable battery, which is configured to provide energy to a system, when operation of the electronic device is needed and no other energy source is available. The system further comprises a battery charging unit with an internal switch, wherein the battery charging unit is coupled to the chargeable battery and is configured to charge the chargeable battery. The system further comprises a deep discharge protection unit and a transport mode unit. The discharge protection unit is configured to monitor a voltage of the chargeable battery and disconnect the chargeable battery from the system, when the battery voltage is lower than a given threshold voltage and the transport mode unit is configured to trigger an opening the internal switch of the battery charging unit, wherein the chargeable battery is disconnected from the system when the at least one switch is opened.

An opening of the internal switch is triggered after the first insertion of the chargeable battery in the electronic device at the end of the production line and before connecting the electronic device to an external energy source. As it is usually not known how long it takes from production to the first use of a device, a deep discharge during shipment of the device may be prevented.

In this way a deep discharge of the chargeable battery may be prevented during shipment of a device, when it is already inserted in an electronic device. As an internal switch is already included in most battery charging units, no additional expensive and/or large switches are needed.

The deep discharge protection unit may be configured to trigger an opening of the internal switch of the battery charging unit when the battery voltage is lower than the given threshold voltage. A deep discharge of the chargeable battery may therefore be prevented during the normal operation of the electronic device.

The on-board unit may be mounted in a vehicle and the external energy source is a vehicle battery.

The system may comprise a controller, which is configured to enable or disable a charging of the chargeable battery. The controller may be configured to receive a manual input, which indicates that a disconnection of the chargeable battery from the system is desired. For example, an operator may instruct the controller at the end of the production line to disconnect the chargeable battery from the system.

The controller may be further configured to output a transport signal, when a manual input is received, wherein the transport signal triggers an opening of the internal switch of the battery charging unit.

The internal switch may be closed and the chargeable battery coupled to the system again, when the electronic device is coupled to the external energy source. No further command is needed to return the system from the transport mode to a running mode. A customer may resume the functionalities of the system by simply plugging it to an energy source.

The battery may be a lithium-ion or a nickel-cadmium battery. Such batteries may be charged. They have a very high energy density compared to other batteries. Further, lithium-ion batteries may be charged up to comparably high voltages.

A method for deep discharge protection of a chargeable battery in an on-board unit comprises charging the chargeable battery by means of a battery charging unit which is coupled to the chargeable battery and which comprises an internal switch. The method further comprises using the chargeable battery to provide energy to a system, when operation of the electronic device is needed and no other energy source than the chargeable battery is available, monitoring a voltage of the chargeable battery and disconnecting the chargeable battery from the system, when the battery voltage is lower than a given threshold voltage. An opening of the internal switch of the battery charging unit is triggered, wherein the chargeable battery is disconnected from the system when the at least one switch is opened.

An opening of the internal switch is triggered after the first insertion of the chargeable battery in the electronic device at the end of the production line and before connecting the electronic device to an external energy source.

An opening of the internal switch of the battery charging unit may be triggered when the battery voltage is lower than the given threshold voltage.

Examples are now explained with reference to the drawings. In the drawings the same reference characters denote like features.
Figure 1 schematically illustrates in a block diagram an example of a battery charging circuit,
Figure 2 schematically illustrates in a block diagram a system for deep discharge protection according to one example of the present invention,
Figure 3 schematically illustrates an example of a charging unit according to the present invention,
Figure 4 schematically illustrates an example of a transport mode unit according to the present invention,
Figure 5 schematically illustrates an example of a deep discharge protection unit according to the present invention,
Figure 6 an example of a method for deep discharge protection according to the present invention.

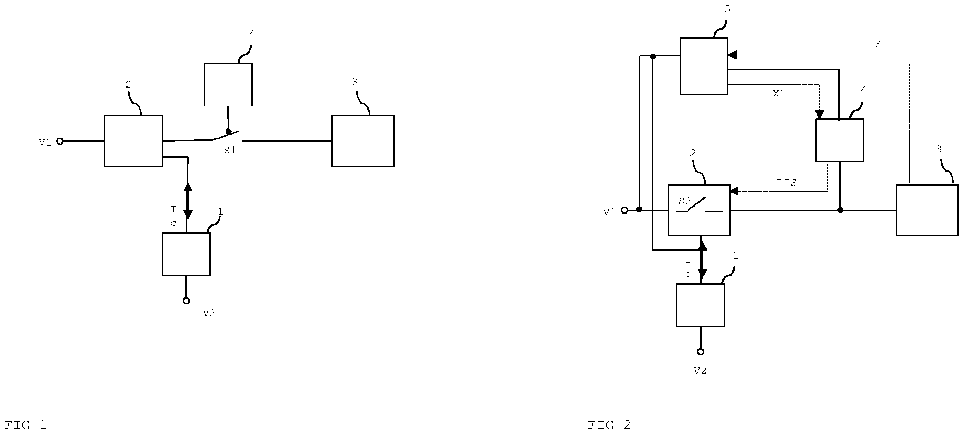

Figure 1 illustrates in a block diagram a battery charging circuit. The battery charging circuit includes a chargeable battery 1, which may be a lithium-ion (li-ion) battery. With a first output, the chargeable battery 1 is coupled to a second terminal V2 for a second potential, which may be ground, for example. A battery charging unit 2 is coupled between a second output of the chargeable battery 1 and a first terminal V1 for a first potential. The first terminal V1 may be coupled to a vehicle battery, for example. More precisely, the first terminal V1 may be coupled to what is generally known as terminal 30. The battery charging circuit may be integrated in an electronic device such as an on-board unit, for example. An on-board unit usually is configured to determine the position of a vehicle in regular intervals and provide this position data to a central office for billing. Therefore, one or more devices (e.g. controllers), which perform the functionalities of the electronic device, are further included in the battery charging circuit. Such devices are represented as the system 3, which is coupled to the battery charging unit 2. The system 3 may be powered by the vehicle battery or, if the vehicle battery is not connected, by the chargeable battery 1.

The battery charging unit 2 is configured to provide power to the system 3, as well as to charge the chargeable battery 1, if desired. It is possible that at one point, the battery charging unit 2 only provides power to the system 3, but battery charging is disabled (e.g. when the chargeable battery is fully charged). It is, however, also possible that the battery charging unit 2 provides power to the system 3 and at the same time charges the chargeable battery 1. Further, it is possible that the battery charging unit charges the chargeable battery 1, while no power is provided to the system 3.

The system 3 may include a controller (not illustrated in Figure 1), which is configured to enable the battery charging unit 2 to charge the chargeable battery 1, if charging of the chargeable battery 1 is required. The controller may be further configured to disable the battery charging unit 2, if charging of the chargeable battery 1 is not required.

To protect the chargeable battery 1 from completely discharging (deep discharge), a deep discharge protection unit 4 is included in the battery charging circuit of Figure 1. The deep discharge protection unit 4 is configured to determine a voltage of the chargeable battery 1. Every chargeable battery 1 may be charged up to a maximum voltage, e.g. 4.2V. When the chargeable battery 1 powers a system 3, the battery voltage decreases. The deep discharge protection unit 4 is further configured to compare the determined battery voltage to a predetermined threshold voltage. If the battery voltage falls below the threshold voltage, the chargeable battery 1 is disconnected from the system 3 by means of a switch S1. The switch S1 may be a power MOS-transistor, for example. When disconnected from the system 3, no more energy is provided to the system 3 and any other components and deep discharge may be prevented.

Before electronic devices are used for the first time after production, usually a certain time passes (e.g. during shipment of the devices). It is often desired to provide electronic devices already including the chargeable battery. This is because in some industries such as the automotive industry, for example, special connections or contacts are used. Therefore, it might be more convenient for a user to have a battery with matching connections or contacts already inserted. However, if the time between production and use (e.g. installation of an on-board unit in a vehicle) is too long, and the battery is already connected to the system, the battery might be completely discharged, which may cause fatal damages of the battery. It is therefore desired to disconnect the chargeable battery from the rest of the system as long as it is not connected to the vehicle battery. The switch S1, therefore, may be opened during the delivery of the devices, and may be closed once the on-board unit is connected to the vehicle battery.

The battery charging circuit illustrated in Figure 1, especially the switch S1, which is coupled between the system 3 and the battery charging unit 2, has several drawbacks. In particular, the switch S1, which is usually implemented as a transistor, needs to be a rather big and, therefore, expensive switch (e.g. power transistor) in order to sufficiently protect the chargeable battery 1 from discharging.

In the system for deep discharge protection of a chargeable battery according to the present invention, therefore, the switch S1 is omitted. Such a system is schematically illustrated in Figure 2. In addition to the components already explained by means of Figure 1 a transport mode unit 5 is coupled between the deep discharge protection unit 4 and the first terminal V1. The transport mode unit 5 is configured to initiate a disconnection of the chargeable battery 1 from the other components, especially from the system 3. According to the present invention, when disconnecting the chargeable battery 1 from the system 3, the charging unit 2 functions as a switching device. Therefore, the charging unit 2 includes at least one internal switch S2. By opening this at least one internal switch S2, the chargeable battery 1 may be disconnected from the rest of the battery charging system. Many battery charging ICs (integrated circuits) available today already include a internal switch S2, which may be used to disconnect the chargeable battery 1. The chargeable battery 1, by means of that internal switch S2, may be disconnected from the system 3 during transportation from the manufacturer of the on-board unit until its installation in a vehicle. The internal switch S2, however, may also be used to disconnect the chargeable battery 1 from the system 3 after installation in a vehicle, when the battery voltage falls below a certain threshold.

During or at the end of the production of the on-board unit, the chargeable battery 1 will be inserted in the on-board unit. Usually, at this point, the chargeable battery 1 is partly or completely charged. When the on-board unit is delivered to a customer, the chargeable battery 1 will provide at least a small amount of power to the other components of the on-board unit (the system 3). If the on-board unit is not connected to a vehicle battery after a certain time, the chargeable battery 1 may be completely discharged and, therefore, may be damaged. Therefore, after inserting the chargeable battery in the on-board unit, the system 3 sends a first transport signal TS to the transport mode unit 5. The transport mode unit 5 again sends a second signal X1 to the deep discharge protection unit 4. This results in a third signal DIS being sent to the charging unit 2. This third signal DIS causes the charging unit 2 to decouple the chargeable battery 1 from the system 3 by opening the internal switch S2. The on-board unit at this moment enters a transportation mode.

When the on-board unit is mounted on a vehicle and the vehicle battery is connected to the on-board unit (terminal V1 of the battery charging system will be connected to the vehicle battery), the chargeable battery 1 will again be coupled to the system 3. By connecting the vehicle battery, the on-board unit will exit the transportation mode and resume its normal operation.

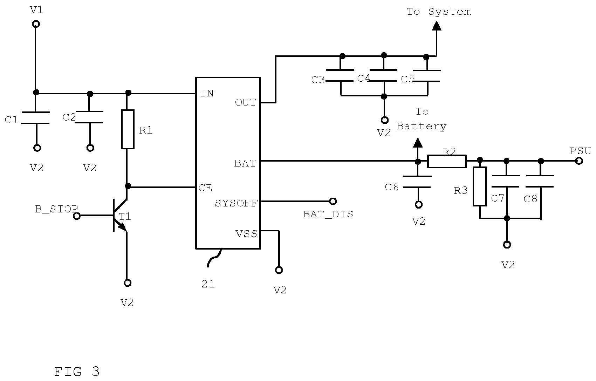

Figure 3 illustrates one example of a charging unit 2 in greater detail. The charging unit 2 includes a charging IC 21 (integrated circuit). Charging ICs are special devices, which are configured to enable or disable the charging of a chargeable battery 1. Charging ICs are offered by several different semiconductor companies. Each charging IC 21 usually requires an individual wiring of the different pins. Generally some kind of protection circuitry is needed or components such as resistors and capacitors have to be connected to certain pins, in order to enable certain functionalities of the charging IC 21. The particular wiring depends on the model of the charging IC. Therefore, the circuit illustrated in Figure 3 is only an example. The charging unit 2 may be implemented in any other suitable way. In the circuit illustrated in Figure 3, pins and components, which are not needed for the current invention but might be included in a charging IC 21 are omitted.

The charging IC 21 may be coupled to the second terminal V2, which may be ground, for example, with a first pin VSS. At a second pin SYSOFF, the charging IC 21 may receive a signal BAT DIS. The second pin SYSOFF may be a system enable input, for example. If the signal BAT_DIS is provided to the second pin SYSOFF, the chargeable battery 1 is connected to the system 3. This may be the case when the vehicle battery is not available for any reason. The chargeable battery 1 may be connected to a third pin BAT of the charging IC 21. A voltage divider including resistors R2, R2 and capacitors C6, C7, C8 may be coupled between the battery 1 and the third pin. In this way, a voltage of the battery 1 may be monitored. If the voltage falls below a certain threshold, the battery 1 may be disconnected from the system 3, e.g. by opening the internal switch S2 (not illustrated in Figure 3). With a fourth pin OUT, the chargeable IC 21 may be coupled to the system 3. Three capacitors C3, C4 and C5 are coupled in parallel between a common node between the system 3 and the charging IC 21 and the second terminal V2 (e.g. ground). The capacitors may prevent a fluctuating voltage at the fourth pin OUT and ensure a stable operation of the charging IC 21.

A fifth pin IN is coupled to the first terminal V1 (e.g. vehicle battery). Two capacitors C1 and C2 are coupled in parallel between a common node between the fifth pin IN and the first terminal V1 and the second terminal V2. A resistor R1 is coupled between the fifth pin IN and a sixth pin CE. A transistor T1 is coupled between a common node between the sixth pin CE and the resistor R1 and the second terminal V2 with its load path. At a control terminal, the transistor T1 receives a signal B_STOP. Depending on the signal B_STOP, the transistor T1 is either conducting or non-conducting. For example, the transistor T1 may be conducting, when the signal B_STOP takes on a logic High level (or a logic Low level). The sixth pin CE is then coupled to the second terminal V2 via the transistor T1. This results in a logic High level (or a logic Low level, respectively) being received at the sixth pin CE. This will transfer the charging IC 21 to a standby mode. In standby mode, an internal switch of the charging IC 21 is opened, which disconnects the chargeable battery 1 from the system 3 and from the first terminal V1. The chargeable battery 1 will not be charged during standby mode and the system 3 will not be provided with energy.

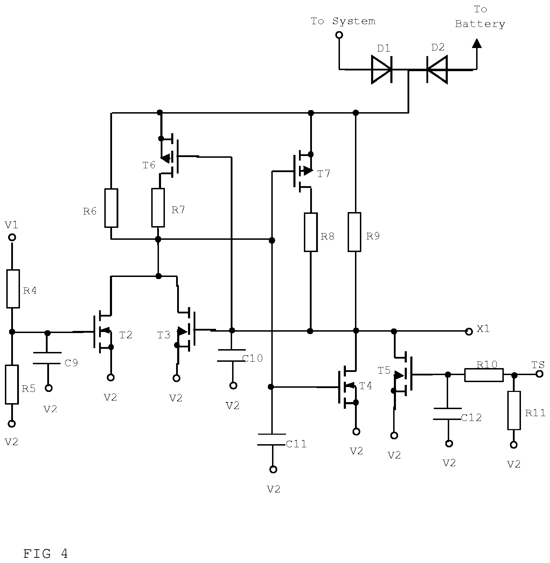

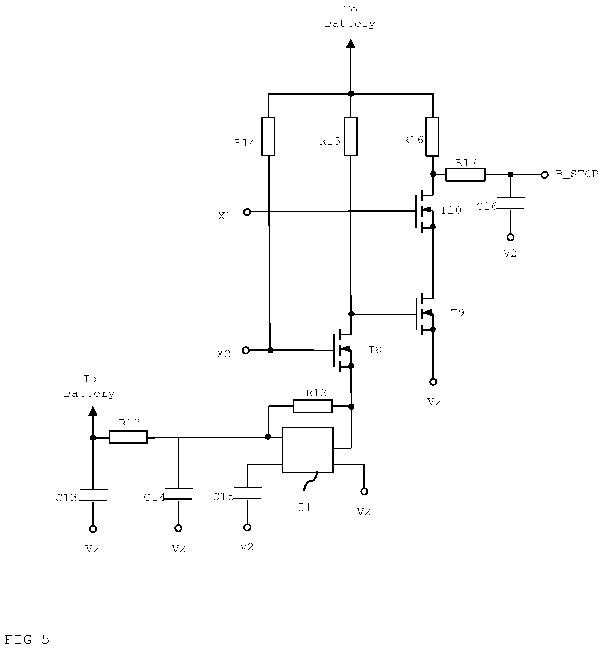

In Figure 4, one specific example of a transport mode unit 5 is illustrated. The circuit illustrated in Figure 4, however, is only an example to further describe the general functionality of the battery charging system. The transport mode unit 5 may be implemented in any other suitable way. If a transport signal is received at the terminal TS, or if the transport signal takes on a certain level, e.g. logic High (or Low, respectively), the signal at terminal X1 changes its state (e.g. from logic High to logic Low or vice versa). The transport signal TS may be provided by the system 3, for example. In particular, a controller of the system 3 may generate signal TS at the end of the production line, before the on-board unit is sent to a customer for installation. The terminal X1 is coupled to the deep discharge protection unit 4, as will be further explained by means of Figure 5. The transport mode unit 5 is both coupled to the chargeable battery 1 and the system 3. The circuit illustrated in Figure 4 acts as a bistable circuit. The circuit of Figure 4 illustrates a circuit which is easy to implement, using rather cheap and simple components. Further, the circuit has a very low quiescent current compared to other circuits. As the circuit diagram in Figure 4 is only one example out of many of an implementation of a transport mode unit 5, the exact function of the different components will not be described in further detail.

An example for a deep discharge protection unit 4 is illustrated in Figure 5. As long as the signal at terminal X1 (received from the transport mode unit 5) is in a fist state (e.g. High), the chargeable battery 1 is coupled to the system 3. If the signal at terminal X1 changes its state, a signal B_STOP will be output to the charging unit 2, as has been described by means of Figure 3. The chargeable battery 1 will then be disconnected from the system, by opening an internal switch of the charging unit 2. In the circuit of Figure 5, the voltage monitoring unit 51 becomes conductive, if a voltage of the chargeable battery is above a certain threshold (e.g. 3.3V). The voltage monitoring unit 51, therefore, may include some kind of comparator, which compares the battery voltage to a predefined threshold voltage. If the voltage monitoring unit 51 is conductive, transistor T8 will be coupled to the second terminal V2. If at the same time signal X1 is low (or high, respectively, depending on which kind of transistor is used) the transistor T8 is non-conductive. Transistor T9, on the other hand, would be conductive. If signal X1 is High (or low, respectively), the transistor T10 will become conductive. If both transistors T9 and T10 are conductive, the output signal B_STOP will be low. As long as signal B_STOP is low, the charging IC 21 will provide power to the system 3 (as has been explained by means of Figure 3).

When put in the transport mode, signal X1 will get Low. Transistor T10 would then be non-conductive and, accordingly, output signal B_STOP will be High. The charging IC 21 will then stop supplying power to the system 3 and the internal switch S2 of the charging IC 21 will be opened.

Once the on-board unit is coupled to a vehicle battery, a voltage is received at terminal V1. This results in the chargeable battery 1 being again coupled to the system 3. It is also possible to restore the functionality of the battery charging system by plugging the on-board unit to a cigarette lighter of a vehicle. This also results in a voltage, which is supplied at the first terminal V1.

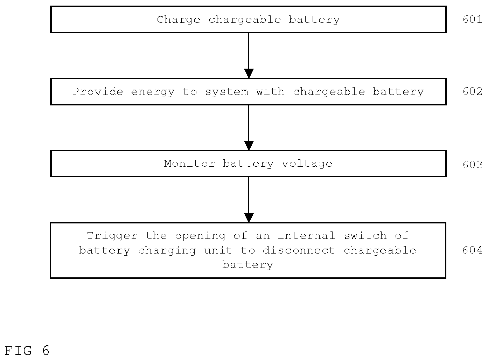

Figure 6 illustrates an example of a method for deep discharge protection. In a first step, the chargeable battery 1 may be charged (step 601). The charging may be performed by a battery charging unit 2 which is coupled to the chargeable battery 1 and which includes an internal switch S2. It is, however, also possible that the charging is performed by some external charging unit and the chargeable battery 1 is already partly or completely charged when it is coupled to the internal charging unit.

The chargeable battery 1 may then be used to provide energy to the system 3 (step 602), when no other energy source, such as a vehicle battery for example, is available and an operation of the system is needed. The voltage of the chargeable battery 1 is monitored (step 603). The monitoring is performed irrespective of a use of the chargeable battery 1, meaning that the monitoring is performed while the chargeable battery 1 powers the system 3, as well as while the chargeable battery 1 is not used to power the system. This is because the chargeable battery 1 also discharges steadily, even if it is not used to power the system.

An opening of an internal switch S2 of a battery charging unit 2 may be triggered (step 604), wherein the battery charging unit 2 is coupled to the chargeable battery 1, and wherein the chargeable battery 1 is disconnected from the system 3 when the at least one internal switch S2 is opened. The opening of the internal switch S2 of the battery charging unit 2 may, for example, be triggered when the battery voltage falls below a predefined threshold voltage. It is, however, also possible to open the internal switch S2 of the battery charging unit 2 after the first insertion of the chargeable battery 1 in the electronic device at the end of the production line and before connecting the electronic device to an external energy source.

The chargeable battery 1 may be a lithium-ion battery, for example, as has already been described above. The chargeable battery1 , however, may be any other kind of chargeable battery, such as a nickel-cadmium battery, for example.

## Claims

1. On-board unit, configured to determine the position of a vehicle in regular intervals and provide this position data to a central office for billing, the on-board unit comprising a system for deep discharge protection of a chargeable battery (1), the system comprises:
a chargeable battery (1), which is configured to provide energy to a system (3), when operation of the on-board unit is needed and no other energy source is available;
a battery charging unit (2) with an internal switch (S2), wherein the battery charging unit (2) is coupled to the chargeable battery (1) and is configured to charge the chargeable battery (1) and wherein the battery charging unit (2) is coupled between an output of the chargeable battery (1) and a first terminal (V1) for a first potential;
a deep discharge protection unit (4), which is configured to monitor a voltage of the chargeable battery (1) and disconnect the chargeable battery (1) from the system (3), when the battery voltage is lower than a given threshold voltage; and
a transport mode unit (5), which is coupled between the deep discharge protection unit (4) and the first terminal (V1) and which is configured to trigger an opening of the internal switch (S2) of the battery charging unit (2), wherein the chargeable battery (1) is disconnected from the system (3) when the at least one internal switch (S2) is opened;
the system (3) being configured to send a first transport signal (TS) to the transport mode unit (5) after inserting the chargeable battery (1) in the on-board unit and the transport mode unit (5) being configured to send a second signal (X1) to the deep discharge protection unit (4), which results in a third signal (DIS) being sent by the deep discharge protection unit to the charging unit (2), and the third signal (DIS) causes the charging unit (2) to decouple the chargeable battery (1) from the system (3) by opening the internal switch (S2), wherein the internal switch (S2) is closed and the chargeable battery (1) is coupled to the system (3) again, when the on-board unit is mounted in a vehicle and the first terminal (V1) is coupled to a vehicle battery.

2. On-board unit according to claim 1, wherein the deep discharge protection unit (4) is further configured to trigger an opening of the internal switch (S2) of the battery charging unit (2) when the battery voltage is lower than the given threshold voltage.

3. On-board unit according to any of claims 1 to 2, wherein the system (3) comprises a controller, which is configured to enable or disable a charging of the chargeable battery (1).

4. On-board unit according to claim 3, wherein the controller is further configured to receive a manual input, which indicates that a disconnection of the chargeable battery (1) from the system (3) is desired.

5. On-board unit according to claim 4, wherein the controller is further configured to output the transport signal (TS), when a manual input is received, wherein the transport signal (TS) triggers an opening of the internal switch (S2) of the battery charging unit (2).

6. On-board unit according to any of the preceding claims, wherein the battery (1) is a lithium-ion or a nickel-cadmium battery.

7. Method for deep discharge protection of a chargeable battery (1) in an on-board unit, which on-board unit is configured to determine the position of a vehicle in regular intervals and provide this position data to a central office for billing, the method comprises:
charging the chargeable battery (1);
using the chargeable battery (1) to provide energy to a system (3), when operation of the on-board unit is needed and no other energy source than the chargeable battery (1) is available;
monitoring a voltage of the chargeable battery (1) by a deep discharge protection unit (4) and disconnecting the chargeable battery (1) from the system (3), when the battery voltage is lower than a given threshold voltage; and
triggering an opening of an internal switch (S2) of a battery charging unit (2) by a transport mode unit (5), wherein the battery charging unit (2) is coupled to the chargeable battery (1), and wherein the chargeable battery (1) is disconnected from the system (3) when the at least one internal switch (S2) is opened;
the system (3) sending a first transport signal (TS) to the transport mode unit (5) after inserting the chargeable battery (1) in the on-board unit and the transport mode unit (5) sending a second signal (X1) to the deep discharge protection unit (4), which results in a third signal (DIS) being sent by the deep discharge protection unit to the charging unit (2), and the third signal (DIS) causes the charging unit (2) to decouple the chargeable battery (1) from the system (3) by opening the internal switch (S2), and the internal switch (S2) is closed and the chargeable battery (1) is coupled to the system (3) again, when the on-board unit is mounted in a vehicle and coupled to a vehicle battery.

8. Method according to claim 7, wherein an opening of the internal switch (S2) of the battery charging unit (2) is triggered when the battery voltage is lower than the given threshold voltage.

## Patentansprüche

1. Bordeinheit, die dazu ausgebildet ist, in regelmäßigen Abständen die Position eines Fahrzeugs zu bestimmen und diese Positionsdaten einer Zentrale zur Abrechnung zur Verfügung zu stellen, wobei die Bordeinheit ein System zum Tiefentladungsschutz einer aufladbaren Batterie (1) umfasst, das System umfassend:
eine aufladbare Batterie (1), die dazu ausgebildet ist, ein System (3) mit Energie zu versorgen, wenn der Betrieb der Bordeinheit erforderlich ist und keine andere Energiequelle verfügbar ist;
eine Batterieladeeinheit (2) mit einem internen Schalter (S2), wobei die Batterieladeeinheit (2) mit der aufladbaren Batterie (1) verbunden ist und zum Laden der aufladbaren Batterie (1) ausgebildet ist, und wobei die Batterieladeeinheit (2) zwischen einem Ausgang der aufladbaren Batterie (1) und einem ersten Anschluss (V1) für ein erstes Potential verbunden ist;
eine Tiefentladungsschutzeinheit (4), die dazu ausgebildet ist, eine Spannung der aufladbaren Batterie (1) zu überwachen und die aufladbare Batterie (1) von dem System (3) zu trennen, wenn die Batteriespannung niedriger als eine bestimmte Schwellenspannung ist; und
eine Transportmoduseinheit (5), die zwischen der Tiefentladungsschutzeinheit (4) und dem ersten Anschluss (V1) verbunden ist und dazu ausgebildet ist, ein Öffnen des internen Schalters (S2) der Batterieladeeinheit (2) auszulösen, wobei die aufladbare Batterie (1) beim Öffnen des mindestens einen internen Schalters (S2) von dem System (3) getrennt wird;
wobei das System (3) dazu ausgebildet ist, nach dem Einsetzen der aufladbaren Batterie (1) in die Bordeinheit ein erstes Transportsignal (TS) an die Transportmoduseinheit (5) zu senden, und die Transportmoduseinheit (5) dazu ausgebildet ist, ein zweites Signal (X1) an die Tiefentladungsschutzeinheit (4) zu senden, was dazu führt, dass ein drittes Signal (DIS) von der Tiefentladungsschutzeinheit an die Ladeeinheit (2) gesendet wird, und wobei dritte Signal (DIS) bewirkt, dass die Ladeeinheit (2) die aufladbare Batterie (1) von dem System (3) abkoppelt, indem der interne Schalter (S2) geöffnet wird, wobei der interne Schalter (S2) geschlossen und die aufladbare Batterie (1) wieder mit dem System (3) verbunden wird, wenn die Bordeinheit in einem Fahrzeug montiert und der erste Anschluss (V1) mit einer Fahrzeugbatterie verbunden wird.

2. Bordgerät nach Anspruch 1, wobei die Tiefentladungsschutzeinheit (4) ferner dazu ausgebildet ist, ein Öffnen des internen Schalters (S2) der Batterieladeeinheit (2) auszulösen, wenn die Batteriespannung niedriger als die angegebene Schwellenspannung ist.

3. Bordgerät nach einem der Ansprüche 1 bis 2, wobei das System (3) eine Steuereinheit umfasst, die dazu ausgebildet ist, ein Laden der aufladbaren Batterie (1) zu aktivieren oder zu deaktivieren.

4. Bordgerät nach Anspruch 3, wobei die Steuereinheit ferner dazu ausgebildet ist, eine manuelle Eingabe zu empfangen, die anzeigt, dass eine Trennung der aufladbaren Batterie (1) von dem System (3) gewünscht ist.

5. Bordgerät nach Anspruch 4, wobei die Steuereinheit ferner dazu ausgebildet ist, das Transportsignal (TS) auszugeben, wenn eine manuelle Eingabe empfangen wird, wobei das Transportsignal (TS) ein Öffnen des internen Schalters (S2) des Batterieladegeräts (2) auslöst.

6. Bordgerät nach einem der vorhergehenden Ansprüche, wobei die Batterie (1) eine Lithium-Ionen- oder eine Nickel-Cadmium-Batterie ist.

7. Verfahren zum Tiefentladungsschutz einer aufladbaren Batterie (1) in einer Bordeinheit, wobei die Bordeinheit dazu ausgebildet ist, in regelmäßigen Abständen die Position eines Fahrzeugs zu bestimmten und diese Positionsdaten einer Zentrale zur Abrechnung zur Verfügung zu stellen, das Verfahren umfassend:
Laden der aufladbaren Batterie (1);
Verwenden der aufladbaren Batterie (1) zur Energieversorgung eines Systems (3), wenn der Betrieb der Bordeinheit erforderlich ist und keine andere Energiequelle als die aufladbare Batterie (1) verfügbar ist;
Überwachen einer Spannung der aufladbaren Batterie (1) durch eine Tiefentladungsschutzeinheit (4) und Trennen der aufladbaren Batterie (1) von dem System (3), wenn die Batteriespannung niedriger als eine gegebene Schwellenspannung ist; und
Auslösen eines Öffnens eines internen Schalters (S2) einer Batterieladeeinheit (2) durch eine Transportmoduseinheit (5), wobei die Batterieladeeinheit (2) mit der aufladbaren Batterie (1) verbunden ist, und wobei die aufladbare Batterie (1) von dem System (3) getrennt wird, wenn der mindestens eine interne Schalter (S2) geöffnet wird;
wobei das System (3) nach dem Einsetzen der aufladbaren Batterie (1) in die Bordeinheit ein erstes Transportsignal (TS) an die Transportmoduseinheit (5) sendet und die Transportmoduseinheit (5) ein zweites Signal (X1) an die Tiefentladungsschutzeinheit (4) sendet, was dazu führt, dass ein drittes Signal (DIS) von der Tiefentladungsschutzeinheit an die Ladeeinheit (2) gesendet wird, und wobei das dritte Signal (DIS) bewirkt, dass das Ladegerät (2) die aufladbare Batterie (1) von dem System (3) abkoppelt, indem der interne Schalter (S2) geöffnet wird, und wobei der interne Schalter (S2) geschlossen und die aufladbare Batterie (1) wieder mit dem System (3) verbunden wird, wenn die Bordeinheit in einem Fahrzeug montiert und mit einer Fahrzeugbatterie verbunden wird.

8. Verfahren nach Anspruch 7, wobei ein Öffnen des internen Schalters (S2) des Batterieladegeräts (2) ausgelöst wird, wenn die Batteriespannung kleiner als die vorgegebene Schwellenspannung ist.

## Revendications

1. Unité embarquée, configurée pour déterminer la position d'un véhicule selon des intervalles réguliers et pour fournir les données de position afférentes à un service centralisateur à des fins de facturation, l'unité embarquée comprenant un système pour la protection contre les décharges profondes d'une batterie rechargeable (1), le système comprend :
une batterie rechargeable (1), laquelle est configurée pour fournir de l'énergie à un système (3) lorsque le fonctionnement de l'unité embarquée est nécessaire et qu'aucune autre source d'énergie n'est disponible ;
une unité de charge de batterie (2) munie d'un commutateur interne (S2), dans laquelle l'unité de charge de batterie (2) est couplée à la batterie rechargeable (1) et est configurée pour charger la batterie rechargeable (1), et dans laquelle l'unité de charge de batterie (2) est couplée entre une sortie de la batterie rechargeable (1) et une première borne (V1) pour un premier potentiel ;
une unité de protection contre les décharges profondes (4), laquelle est configurée pour surveiller une tension de la batterie rechargeable (1) et pour déconnecter la batterie rechargeable (1) du système (3) lorsque la tension de batterie est inférieure à une tension de seuil donnée ; et
une unité de mode de transport (5), laquelle est couplée entre l'unité de protection contre les décharges profondes (4) et la première borne (V1) et laquelle est configurée pour déclencher une ouverture du commutateur interne (S2) de l'unité de charge de batterie (2), dans laquelle la batterie rechargeable (1) est déconnectée du système (3) lorsque l'au moins un commutateur interne (S2) est ouvert ;
le système (3) étant configuré pour envoyer un premier signal de transport (TS) sur l'unité de mode de transport (5) après l'insertion de la batterie rechargeable (1) dans l'unité embarquée et l'unité de mode de transport (5) étant configurée pour envoyer un deuxième signal (X1) sur l'unité de protection vis-à-vis des décharges profondes (4), ce qui entraîne qu'un troisième signal (DIS) est envoyé par l'unité de protection contre les décharges profondes sur l'unité de charge (2), et le troisième signal (DIS) a pour effet que l'unité de charge (2) découple la batterie rechargeable (1) du système (3) en ouvrant le commutateur interne (S2), dans laquelle le commutateur interne (S2) est fermé et la batterie rechargeable (1) est couplée à nouveau au système (3) lorsque l'unité embarquée est montée dans un véhicule et que la première borne (V1) est couplée à une batterie de véhicule.

2. Unité embarquée selon la revendication 1, dans laquelle l'unité de protection contre les décharges profondes (4) est en outre configurée pour déclencher une ouverture du commutateur interne (S2) de l'unité de charge de batterie (2) lorsque la tension de batterie est inférieure à la tension de seuil donnée.

3. Unité embarquée selon l'une quelconque des revendications 1 et 2, dans laquelle le système (3) comprend un contrôleur, lequel est configuré pour autoriser ou interdire une charge de la batterie rechargeable (1).

4. Unité embarquée selon la revendication 3, dans laquelle le contrôleur est en outre configuré pour recevoir une entrée manuelle, laquelle indique qu'une déconnexion de la batterie rechargeable (1) vis-à-vis du système (3) est souhaitée.

5. Unité embarquée selon la revendication 4, dans laquelle le contrôleur est en outre configuré pour émettre en sortie le signal de transport (TS) lorsqu'une entrée manuelle est reçue, dans laquelle le signal de transport (TS) déclenche une ouverture du commutateur interne (S2) de l'unité de charge de batterie (2).

6. Unité embarquée selon l'une quelconque des revendications précédentes, dans laquelle la batterie (1) est une batterie lithium-ion ou une batterie nickel-cadmium.

7. Procédé pour la protection contre les décharges profondes d'une batterie rechargeable (1) dans une unité embarquée, laquelle unité embarquée est configurée pour déterminer la position d'un véhicule selon des intervalles réguliers et pour fournir les donnée de position afférentes à un service centralisateur à des fins de facturation, le procédé comprend :
la charge de la batterie rechargeable (1) ;
l'utilisation de la batterie rechargeable (1) pour fournir de l'énergie à un système (3) lorsque le fonctionnement de l'unité embarquée est nécessaire et qu'aucune autre source d'énergie que la batterie rechargeable (1) n'est disponible
la surveillance d'une tension de la batterie rechargeable (1) par une unité de protection contre les décharges profondes (4) et la déconnexion de la batterie rechargeable (1) vis-à-vis du système (3) lorsque la tension de batterie est inférieure à une tension de seuil donnée ; et
le déclenchement d'une ouverture d'un commutateur interne (S2) d'une unité de charge de batterie (2) par une unité de mode de transport (5), dans lequel l'unité de charge de batterie (2) est couplée à la batterie rechargeable (1), et dans lequel la batterie rechargeable (1) est déconnectée du système (3) lorsque l'au moins un commutateur interne (S2) est ouvert ;
le système (3) envoyant un premier signal de transport (TS) sur l'unité de mode de transport (5) après l'insertion de la batterie rechargeable (1) dans l'unité embarquée et l'unité de mode de transport (5) envoyant un deuxième signal (X1) sur l'unité de protection vis-à-vis des décharges profondes (4), ce qui entraîne qu'un troisième signal (DIS) est envoyé par l'unité de protection contre les décharges profondes sur l'unité de charge (2), et le troisième signal (DIS) a pour effet que l'unité de charge (2) découple la batterie rechargeable (1) du système (3) en ouvrant le commutateur interne (S2), et le commutateur interne (S2) est fermé et la batterie rechargeable (1) est couplée à nouveau au système (3), lorsque l'unité embarquée est montée dans un véhicule et est couplée à une batterie de véhicule.

8. Procédé selon la revendication 7, dans lequel une ouverture du commutateur interne (S2) de l'unité de charge de batterie (2) est déclenchée lorsque la tension de batterie est inférieure à la tension de seuil donnée.
